# EUROPÄISCHE PATENTSCHRIFT

(11) **EP 1 060 861 B1**
(45) Veröffentlichungstag und Bekanntmachung des Hinweises auf die Patenterteilung: **16.02.2005**
(21) Anmeldenummer: 00110994.1
(22) Anmeldetag: 29.05.2000
(51) Int. Cl.: B29C 45/14, B29C 43/18, B29C 49/24, B32B 31/30

(54) **Verfahren zur Herstellung eines dreidimensionalen Formteils**
Method for molding a three dimensional product
Méthode de moulage d'un objet tridimensionnel

(30) Priorität: 16.06.1999 DE 19927346
(43) Veröffentlichungstag der Anmeldung: 20.12.2000
(73) Patentinhaber: Basell Polyolefine GmbH, 50389 Wesseling (DE)
(72) Erfinder: Müller, Klaus, 65843 Sulzbach (DE); Klemm, Klaus, 97656 Oberelsbach (DE)
(74) Vertreter: Hoffmann, Peter

(56) Entgegenhaltungen:
- EP-A- 0 419 001
- EP-A- 0 819 516
- EP-A- 0 852 187
- EP-A- 0 995 571
- DE-A- 2 009 819
- FR-A- 2 673 575
- GB-A- 1 167 403
- US-A- 4 101 698
- US-A- 5 763 050

## Beschreibung

Die vorliegende Erfindung betrifft ein Verfahren zur Herstellung eines dreidimensionalen Formteils aus einem Schichtverbundmaterial enthaltend einen Träger aus einem thermoplastischen Polymeren, eine darauf angeordnete Zwischenlage und eine auf der Zwischenlage aufgebrachte hitzegehärtete Schicht.

Die bisher bekannten Schichtverbundmaterialien, welche insbesondere in der Möbel- oder in der Haushaltsgeräteindustrie eingesetzt werden, bestehen im wesentlichen aus einer Trägerschicht aus Holz oder Holzfasern oder aus unter Harzzusatz verpreßten Einzelpapieren, auf die unter Einwirkung von Hitze und Druck Dekorschichten sowie weitere hitzegehärtete Schichten, sogenannte Overlays, aufgebracht werden. Die dabei verwendeten Dekorschichten weisen häufig Holz-, Metall- oder Marmormaserungen auf. Die Dekorschichten werden in vielen Fällen zusammen mit den auf ihnen aufgebrachten hitzegehärteten Schichten als sogenannte Laminate eingesetzt.

Derartige Schichtverbundmaterialien weisen indes den Nachteil auf, daß sie eine gewisse Empfindlichkeit gegenüber von den Rändern her in die Kernschicht eindringender Feuchtigkeit aufweisen, weil sowohl Holz, als auch Holzfasern oder Einzelpapiere unter dem Einfluß von Feuchtigkeit zum Aufquellen neigen. Weiterhin lassen sich derartige Schichtverbundmaterialien nur mit relativ hohem Aufwand verformen.

Für zahlreiche industrielle Anwendungen, beispielsweise in der Automobil- oder Elektroindustrie benötigt man als Oberflächenmaterialien Werkstoffe, die einerseits eine hohe Druck- und Kranzfestigkeit und andererseits eine relativ hohe Temperaturbeständigkeit aufweisen und sich darüber hinaus gut dekorativ ausgestalten lassen sollten.

In der Möbelherstellung werden schon seit längerem Oberflächenmaterialien eingesetzt, wobei mehrere Schichten, u.a. eine Trägerschicht, eine Dekorschicht und eine darauf aufliegende hitzegehärtete Schicht, mit Hilfe von weiteren Verbundschichten, beispielsweise aus Papier oder aus Klebefolien, ein dekoratives Schichtverbundmaterial ergeben. Ein derartiges Schichtverbundmaterial ist jedoch sehr aufwendig herzustellen, weist oft einen hohen Formaldehydanteil auf und zeigt ein ungünstiges Quellverhalten.

Aus der DE-A 1 97 22 339 ist ein Schichtverbundmaterial bekannt, welches eine Trägerschicht aus Polypropylen, eine darauf angeordnete Dekorschicht und eine auf der Dekorschicht aufgebrachte hitzegehärtete Schicht enthält. Weiterhin beschreibt die ältere Anmeldung DE-A 19 858 173 ein Schichtverbundmaterial aus einer Trägerschicht verschiedener anderer thermoplastischer Polymerer, wie zum Beispiel aus bestimmten Copolymeren des Styrols oder aus Polyoxymethylen bzw. aus Polybutylenterephthalat, sowie einer darauf aufgebrachten Dekorschicht und einer auf dieser aufliegenden hitzegehärteten Schicht. Derartige Schichtverbundmaterialien mit einer Trägerschicht aus thermoplastischen Polymeren zeichnen sich gegenüber herkömmlichen Schichtverbundmaterialien mit Trägerschichten aus Holz, Holzfasern oder Papier u.a. durch eine hohe Temperatur- und Feuchtigkeitsbeständigkeit, bessere mechanische Festigkeit und eine leichtere Verarbeitbarkeit aus. Aufgrund einer gewissen Steifigkeit und Sprödigkeit der einzelnen polymeren Schichten zeigen aber auch die aus der DE-A 19 722 339 und der DE-A 19 858 173 bekannten Schichtverbundmaterialien noch gewisse Nachteile beim Verarbeiten und Verformen, insbesondere beim dreidimensionalen Verformen zu Bauteilen für den Automobil-, den Haushalts- oder den Elektrobereich, vor allem bei der Herstellung von dreidimensionalen Formteilen. Bei einer dreidimensionalen Verformung ist eine hohe Flexibilität und leichte Verarbeitbarkeit des Formteils von besonderer Bedeutung.

Der vorliegenden Erfindung lag daher die Aufgabe zugrunde, den geschilderten Nachteilen abzuhelfen und ein Verfahren zur Herstellung eines dreidimensionalen Formteils aus einem Schichtverbundmaterial zu entwickeln, das einfach durchzuführen ist, beliebig ausstaltbare Formteile liefert und ohne großen Aufwand auf kostengünstige Weise in üblichen Werkzeugen durchgeführt werden kann. Weiterhin erstreckte sich die Aufgabe auch darauf, daß das erfindungsgemäße Verfahren die Herstellung dreidimensionaler Formteile ermöglicht, die gegenüber chemischer, mechanischer oder thermischer Beschädigung unempfindlich sind und eine hohe Kratzfestigkeit und Druckfestigkeit aufweisen.

Gelöst wird diese Aufgabe durch ein Verfahren zur Herstellung eines dreidimensionalen Formteils aus einem Schichtverbundmaterial enthaltend einen Träger aus einem thermoplastischen Polypropylen, eine darauf angeordnete Zwischenlage aus einem Vlies aus thermoplastischem Kunststoff, eine auf der Zwischenlage angeordnete Dekorschicht und eine auf der Dekorschicht aufgebrachte hitzegehärtete Schicht, bei dem die Zwischenlage, die Dekorschicht und die auf der Dekorschicht aufgebrachte hitzegehärtete Schicht in einem Werkzeug durch eine thermische Behandlung mit dem Träger verbunden werden und ferner vor oder während der thermischen Behandlung im Werkzeug noch dreidimensional verformt werden.

Das im erfindungsgemäßen Verfahren hergestellte Schichtverbundmaterial kann auch auf beiden Seiten des Trägers aus dem thermoplastischen Polymeren, eine darauf angeordnete Zwischenlage und eine auf der Zwischenlage aufgebrachte hitzegehärtete Schicht enthalten, wodurch eine sandwichartige Struktur mit dem Träger in der Mitte entsteht.

Das Material des Trägers kann 1 bis 60, vorzugsweise 5 bis 50, besonders bevorzugt 10 bis 40 Gew.-%, bezogen auf das Gesamtgewicht des Trägers, an verstärkenden Füllstoffen enthalten, wie zum Beispiel Bariumsulfat, Magnesiumhydroxyd, Talkum mit einer mittleren Korngröße im Bereich von 0,1 bis 10 µm, gemessen nach DIN 66 115, Holz, Flachs, Kreide, Glasfasern, beschichtete Glasfasern, Lang- oder Kurzglasfasern, Glaskugeln oder Mischungen von diesen. Außerdem kann man dem Material des Trägers noch die üblichen Zusatzstoffe wie Licht-, UV- und Wärmestabilisatoren, Pigmente, Ruße, Gleitmittel, Flammschutzmittel, Treibmittel und dergleichen in den üblichen und erforderlichen Mengen hinzufügen.

Als thermoplastisches Polymer, das den Träger bildet, kommerfindüngsgemäß Polypropylen, in Betracht. Dabei sind sowohl Homopolymere als auch Copolymere verwendbar. Der im erfindungsgemäßen verfahren eingesetzte Träger kann auch Rezyklate aus thermoplastischem Polypropylen, enthalten.

Unter der Bezeichnung Polypropylen sollen sowohl Homo- als auch Copolymere des Propylens verstanden werden. Copolymere des Propylens enthalten in untergeordneten Mengen mit Propylen copolymerisierbare Monomere, beispielsweise C₂-C₈-Alk-1-ene wie u.a. Ethylen, But-1-en, Pent-1-en oder Hex-1-en. Es können auch zwei oder mehr verschiedene Comonomere verwendet werden.

Besonders geeignete Träger sind u.a. Homopolymere des Propylens oder Copolymere des Propylens mit bis zu 50 Gew.-% einpolymerisierter anderer Alk-1-ene mit bis zu 8 C-Atomen. Die Copolymere des Propylens sind hierbei statistische Copolymere oder Blockoder Impactcopolymere. Sofern die Copolymere des Propylens statistisch aufgebaut sind, enthalten sie im allgemeinen bis zu 15 Gew.-%, bevorzugt bis zu 6 Gew-%, andere Alk-1-ene mit bis zu 8 C-Atomen, insbesondere Ethylen, But-1-en oder ein Gemisch aus Ethylen und But-1-en.

Block- oder Impactcopolymere des Propylens sind Polymere, bei denen man in der ersten Stufe ein Propylenhomopolymer oder ein statistisches Copolymer des Propylens mit bis zu 15 Gew.-%, bevorzugt bis zu 6 Gew.-%, anderer Alk-1-ene mit bis zu 8 C-Atomen herstellt und dann in der zweiten Stufe ein Propylen-Ethylen-Copolymer mit Ethylengehalten von 15 bis 80 Gew.-%, wobei das Propylen-Ethylen-Copolymer zusätzlich noch weitere C₄-C₈-Alk-1-ene enthalten kann, hinzupolymerisiert. In der Regel wird soviel des Propylen-Ethylen-Copolymer hinzupolymerisiert, daß das in der zweiten Stufe erzeugte Copolymer im Endprodukt einen Anteil von 3 bis 60 Gew-% aufweist.

Die Polymerisation zur Herstellung von Polypropylen kann mittels eines Ziegler-Natta-Katalysatorsystems erfolgen. Dabei werden insbesondere solche Katalysatorsysteme verwendet, die neben einer titanhaltigen Feststoffkomponente a) noch Cokatalysatoren in Form von organischen Aluminiumverbindungen b) und Elektronendonorverbindungen c) aufweisen.

Es können aber auch Katalysatorsysteme auf der Basis von Metallocenverbindungen bzw. auf der Basis von polymerisationsaktiven Metallkomplexen eingesetzt werden.

Im speziellen enthalten übliche Ziegler-Natta-Katalysatorsysteme eine titanhaltige Feststoffkomponente u.a. Halogenide oder Alkohole des drei- oder vierwertigen Titans, ferner eine halogenhaltige Magnesiumverbindung, anorganische Oxide wie zum Beispiel Kieselgel als Träger sowie Elektronendonorverbindungen. Als solche kommen insbesondere Carbonsäurederivate sowie Ketone, Ether, Alkohole oder siliciumorganische Verbindungen in Frage.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066, der US-A 4 857 613 und der US-A 5 288 824 beschrieben. Bevorzugt wird das aus der DE-A 195 29 240 bekannte Verfahren angewandt.

Geeignete Aluminiumverbindungen b) sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Die Alkylgruppen können gleich oder voneinander verschieden sein. Es kommen lineare oder verzweigte Alkylgruppen in Betracht. Bevorzugt werden Trialkylaluminiumverbindungen verwendet, deren Alkylgruppen jeweils 1 bis 8 C-Atome aufweisen, beispielsweise Trimethylaluminium, Triethylaluminium, Tri-iso-butylaluminium, Trioctylaluminium oder Methyldiethylaluminium oder Mischungen daraus.

Neben der Aluminiumverbindung b) verwendet man in der Regel als weiteren Cokatalysator Elektronendonorverbindungen c) wie mono- oder polyfunktionelle Carbonsäuren, Carbonsäureanhydride oder Carbonsäureester, ferner Ketone, Ether, Alkohole, Lactone, sowie phosphor- und siliciumorganische Verbindungen, wobei die Elektronendonorverbindungen c) gleich oder verschieden von den zur Herstellung der titanhaltige Feststoffkomponente a) eingesetzten Elektronendonorverbindungen sein können.

Anstelle von Ziegler-Natta-Katalysatorsysteme können auch Metallocenverbindungen bzw. polymerisationsaktive Metallkomplexe zur Herstellung von Polypropylen verwendet werden.

Unter Metallocenen sollen hier Komplexverbindungen aus Metallen von Nebengruppen des Periodensystems mit organischen Liganden verstanden werden, die zusammen mit metalloceniumionenbildenden Verbindungen wirksame Katalysatorsysteme ergeben. Für einen Einsatz zur Herstellung von Polypropylen liegen die Metallocenkomplexe im Katalysatorsystem in der Regel geträgert vor. Als Träger werden häufig anorganische Oxide eingesetzt, es können aber auch organische Träger in Form von Polymeren, beispielsweise Polyolefine Verwendung finden. Bevorzugt sind die oben beschriebenen anorganischen Oxide, die auch zur Herstellung der titanhaltigen Feststoffkomponente a) verwendet werden.

Üblicherweise eingesetzte Metallocene enthalten als Zentralatome Titan, Zirkonium oder Hafnium, wobei Zirkonium bevorzugt ist. Im allgemeinen ist das Zentralatom über eine π-Bindung an mindestens eine, in der Regel substituierte, Cyclopentadienylgruppe sowie an weitere Substituenten gebunden. Die weiteren Substituenten können Halogene, Wasserstoff oder organische Reste sein, wobei Fluor, Chlor, Brom, oder Jod oder eine C₁-C₁₀-Alkylgruppe bevorzugt sind. Die Cyclopentadienylgruppe kann auch Bestandteil eines entsprechenden heteroaromatischen Systems sein.

Bevorzugte Metallocene enthalten Zentralatome, die über zwei gleichartige oder verschiedene π-Bindungen an zwei substituierte Cyclopentadienylgruppen gebunden sind, wobei diejenigen besonders bevorzugt sind, in denen Substituenten der Cyclopentadienylgruppen an beide Cyclopentadienylgruppen gebunden sind. Insbesondere sind Komplexe bevorzugt, deren substituierte oder unsubstituierte Cyclopentadienylgruppen zusätzlich durch cyclische Gruppen an zwei benachbarten C-Atomen substituiert sind, wobei die cyclischen Gruppen auch in einem heteroaromatischen System integriert sein können.

Bevorzugte Metallocene sind auch solche, die nur eine substituierte oder unsubstituierte Cyclopentadienylgruppe enthalten, die jedoch mit mindestens einem Rest substituiert ist, der auch an das Zentralatom gebunden ist.

Besonders geeignete Metallocenverbindungen sind beispielsweise Ethylenbis(indenyl)-zirkoniumdichlorid, Ethylenbis(tetrahydroindenyl)-zirkoniumdichlorid, Diphenylmethylen-9-fluorenylcyclopentadienylzirkoniumdichlorid, Dimethylsilandiylbis(-3-tert.butyl-5-methylcyclopentadienyl)-zirkoniumdichlorid, Dimethylsilandiyl(2-methyl-4-azapentalen)(2-methyl-4(4'-methylphenyl)-indenyl)-zirkoniumdichlorid Dimethylsilandiyl(2-methyl-4-thiapentalen)(2-ethyl-4(4'-tert.butylphenyl)-indenyl)-zirkoniumdichlorid Ethandiyl(2-ethyl-4-azapentalen)(2-ethyl-4(4'-tert.butylphenyl)-indenyl)-zirkoniumdichlorid Dimethylsilandiylbis(2-methyl-4-azapentalen)-zirkoniumdichlorid Dimethylsilandiylbis(2-methyl-4-thiapentalen)-zirkoniumdichlorid Dimethylsilandiylbis(-2-methylindenyl)-zirkoniumdichlorid, Dimethylsilandiylbis(-2-methylbenzindenyl)-zirkoniumdichlorid Dimethylsilandiylbis(-2-methyl-4-phenylindenyl)zirkonium-dichlorid, Dimethylsilandiylbis(-2-methyl-4-naphthylindenyl)zirkoniumdichlorid, Dimethylsilandiylbis(-2-methyl-4-isopropylindenyl)zirkoniumdichlorid oder Dimethylsilandiylbis (-2-methyl-4,6-diisopropylindenyl)zirkoniumdichlorid sowie die entsprechenden Dimethylzirkoniumverbindungen.

Die Metallocenverbindungen sind entweder bekannt oder nach an sich bekannten Methoden erhältlich. Zur Katalyse können auch Mischungen derartiger Metallocenverbindungen eingesetzt werden, ferner die in der EP-A 416 815 beschriebenen Metallocenkomplexe.

Weiterhin enthalten die Metallocen-Katalysatorsysteme metalloceniumionenbildende Verbindungen. Geeignet sind starke, neutrale Lewissäuren, ionische Verbindungen mit lewissauren Kationen oder ionische Verbindungen mit Brönsted-Säuren als Kation. Beispiele sind hierfür Tris(pentafluorphenyl)boran, Tetrakis(pentafluorophenyl)borat oder Salze des N,N-Dimethylaniliniums. Ebenfalls geeignet als metalloceniumionenbildende Verbindungen sind offenkettige oder cyclische Alumoxanverbindungen. Diese werden üblicherweise durch Umsetzung von Trialkylaluminium mit Wasser hergestellt und liegen in der Regel als Gemische unterschiedlich langer, sowohl linearer als auch cyclischer Kettenmoleküle vor.

Darüber hinaus können die Metallocen-Katalysatorsysteme metallorganische Verbindungen der Metalle der I., II. oder III. Hauptgruppe des Periodensystems enthalten wie n-Butyl-Lithium, n-Butyl-n-octyl-Magnesium oder Tri-iso-butyl-aluminium, Triethylaluminium oder Trimethylaluminium.

Die Herstellung der für den Träger verwendbaren Polypropylene wird durch Polymerisation in wenigstens einer, häufig auch in zwei oder noch mehr hintereinandergeschalteten Reaktionszonen (Reaktorkaskade) in der Gasphase, in einer Suspension oder in einer flüssigen Phase (Bulkphase) durchgeführt. Es können die üblichen, für die Polymerisation von C₂-C₈-Alk-1-enen verwendeten Reaktoren eingesetzt werden. Geeignete Reaktoren sind u.a. kontinuierlich betriebene Rührkessel, Schleifenreaktoren oder Wirbelbettreaktoren. Die Größe der Reaktoren ist für das erfindungsgemäße Verfahren nicht von wesentlicher Bedeutung. Sie richtet sich nach dem Ausstoß, der in der oder in den einzelnen Reaktionszonen erzielt werden soll.

Als Reaktoren werden insbesondere Wirbelbettreaktoren sowie horizontal oder vertikal gerührte Pulverbettreaktoren verwendet. Das Reaktionsbett besteht im erfindungsgemäßen Verfahren im allgemeinen aus dem Polymerisat aus C₂-C₈-Alk-1-enen, das im jeweiligen Reaktor polymerisiert wird.

Die Polymerisation zur Herstellung der als Träger verwendeten Polypropylene wird unter üblichen Reaktionsbedingungen bei Temperaturen von 40 bis 120°C, insbesondere von 50 bis 100°C und Drükken von 10 bis 100 bar, insbesondere von 20 bis 50 bar vorgenommen.

Die als Träger eingesetzten Polypropylene weisen in der Regel eine Schmelzflußrate (MFR), nach ISO 1133, von 0,1 bis 200 g/10 min., insbesondere von 0,2 bis 100 g/10 min., bei 230°C und unter einem Gewicht von 2,16 kg, auf.

Das im erfindungsgemäßen Verfahren eingesetzte Schichtverbundmaterial kann als Zwischenlage einen thermoplastischen Kunststoff als Verbundmaterial enthalten, vorzugsweise aus dem gleichen thermoplastischen Kunststoff wie der Träger. Die Zwischenlage liegt esfindüngsgemäß als dünnes Vlies mit einer Dicke von 0,001 bis 1,0 mm, insbesondere von 0,005 bis 0,3 mm vor. Als Materialien für die Zwischenlage kommen insbesondere Papier, Polypropylen und Polyethylen, Polymere des Styrols, Polyoxymethylen oder Polybutylenterephthalat in Frage.

Bevorzugt wird als Zwischenlage auch ein mit Harz getränktes Vlies, Gewebe oder eine mit Harz getränkte Folie aus einem thermoplastischen Kunststoff verwendet. Als Harze finden hierfür insbesondere Acrylatharze, Phenolharze, Harnstoffharze oder Melaminharze Verwendung. Der Grad der Beharzung kann dabei bis zu 300 % betragen, was bedeutet, daß praktisch die gesamte Oberfläche der Zwischenlage mehrfach mit Harz bedeckt ist. Vorzugsweise liegt der Grad der Beharzung bei 50 bis 150 %, insbesondere bei 70 bis 120%. Das Gewicht der Zwischenlage pro m² liegt im Bereich von 15 bis 110 g, insbesondere im Bereich von 30 bis 60 g.

Im erfindungsgemäßen Verfahren wird ein solches Schichtverbundmaterial hergestellt, das zwischen der Zwischenlage und der hitzegehärteten Schicht noch eine auf der Zwischenlage angeordnete Dekorschicht aufweist.

Die Dekorschicht kann aus einem Kunststoffmaterial bestehen, das eine Prägung oder eine Färbung oder beides in Kombination aufweist, beispielsweise in Form eines Fertiglaminates. Die Dekorschicht kann aber auch aus Papier oder aus einem Gewebe oder einem papierähnlichen oder gewebeähnlichen oder holzähnlichen oder metallähnlichen oder lederähnlichen oder seidenähnlichen Material aufgebaut sein. Beispiele hierfür wären Dekorschichten aus einem aluminiumartigen Material oder aus einem edelstahlartigen Material oder aber aus leder-, seiden-, holz-, kork- oder linoleumartigen Material. Die Dekorschicht kann ebenfalls mit Phenol-, Acrylat-, Harnstoff- oder Melaminharzen beharzt sein, wobei der Grad der Beharzung bei 50 bis 300 %, insbesondere bei 100 bis 300 %, bezogen auf das Gewicht der Dekorschicht liegen kann. Das Gewicht der Dekorschicht liegt üblicherweise im Bereich von 10 bis 200 g pro m², insbesondere im Bereich von 30 bis 150 g pro m² und besonders bevorzugt im Bereich von 60 bis 130 g pro m².

Die auf der Dekorschicht angeordnete hitzegehärtete Schicht (Overlay) besteht vorzugsweise aus einem duroplastischen Kunststoffmaterial, beispielsweise aus einem mit Phenolharz, Acrylatharz, Melaminharz oder Harnstoffharz getränktem Papier, das durch Druck- oder Hitzeeinwirkung während der Herstellung des Schichtverbundmaterials vernetzt wird. Das Gewicht der hitzegehärteten Schicht (Overlay) liegt üblicherweise im Bereich von 10 bis 300 g pro m², insbesondere im Bereich von 15 bis 150 g pro m² und besonders bevorzugt im Bereich von 20 bis 70 g pro m².

Es ist auch möglich, ein Fertiglaminat auf den Träger aufzubringen, welches aus der Zwischenlage und bzw. oder der Dekorschicht und aus dem Overlay besteht. Derartige Fertiglaminate sind als solche bekannt und u.a. von der Firma Melaplast in Schweinfurt, Deutschland erhältlich.

Die Gesamtdicke des im erfindungsgemäßen Verfahren dreidimensional verformten Schichtverbundmaterials kann im Bereich von 1 mm bis 100 mm liegen, vorzugsweise im Bereich von 1 mm bis 20 mm, insbesondere im Bereich von 1,5 bis 10 mm, wobei auf den Träger wenigstens 80 %, vorzugsweise wenigstens 90 % der Gesamtdicke entfallen.

Beim erfindungsgemäßen Verfahren ist es wesentlich, daß die Zwischenlage, die Dekorschicht und die hitzegehärtete Schicht, in einem Werkzeug durch eine thermische Behandlung mit dem Träger verbunden werden und ferner vor oder während der thermischen Behandlung im Werkzeug noch dreidimensional verformt werden. Dabei können die Zwischenlage, die hitzegehärtete Schicht, sowie gegebenenfalls die Dekorschicht sowohl getrennt als Einzelfolie als auch zusammen in Form eines Fertiglaminats in das Werkzeug eingeführt werden. Die thermische Behandlung im Werkzeug erfolgt vorzugsweise beim Temperaturen von 150 bis 300°C, insbesondere bei Temperaturen von 160 bis 280°C und besonders bevorzugt bei Temperaturen von 160 bis 260°C. Auf diese Weise ist es möglich, mit dem erfindungsgemäßen Verfahren ein dreidimensionales Formteil herzustellen.

Das erfindungsgemäße Verfahren kann zu einem in der Weise abgewandelt werden, daß die Zwischenlage und die auf der Zwischenlage aufgebrachte hitzegehärtete Schicht, sowie gegebenenfalls die Dekorschicht, vor der thermischen Behandlung im Werkzeug in einem vorangegangenem Arbeitsgang dreidimensional verformt werden. Dies kann u.a. dadurch geschehen, daß in einem zweiten Werkzeug bzw. einer Form mit Hilfe einer Wärmequelle, beispielsweise einem Flächenwärmer oder einem Hilfswerkzeug, die einzelnen Schichten dreidimensional vorgeformt werden. Ein solches dreidimensionales Vorformen (pre forming) wird üblicherweise bei Temperaturen von wenigstens 150°C, vorzugsweise von wenigstens 170°C und insbesondere von wenigstens 180°C durchgeführt. Die auf diese Weise vorgeformte Zwischenlage, die darauf aufgebrachte hitzegehärtete Schicht sowie gegebenenfalls die Dekorschicht werden dann anschließend in einem weiteren Werkzeug durch eine thermische Behandlung mit dem Träger verbunden.

Zum anderen kann das dreidimensionale Verformen der Zwischenlage, der auf dieser aufgebrachten hitzegehärteten Schicht, sowie gegebenenfalls der zwischen diesen beiden Schichten liegenden Dekorschicht, auch während der thermischen Behandlung im Werkzeug erfolgen. Hierbei wird durch die im Werkzeug herrschenden Prozessparameter, wie Druck und Temperatur beim Füllen des Werkzeugs mit der Schmelze des thermoplastischen Polymeren, eine dreidimensionale Verformung der einzelnen Schichten bzw. Lagen oder aber des Fertiglaminats erreicht.

Das Verbinden der Zwischenlage, der hitzegehärteten Schicht sowie gegebenenfalls der Dekorschicht mit dem Träger erfolgt nach dem erfindungsgemäßen Verfahren durch übliche Verarbeitungsverfahren in der Kunststoffindustrie, beispielsweise durch Spritzgießen, durch Extrusion oder aber durch thermisches Verpressen der einzelnen Schichten oder durch ein thermisches Blasverfahren.

Als Werkzeuge können im erfindungsgemäßen Verfahren die in der Kunststofftechnik üblichen Apparaturen verwendet werden, beispielsweise Spritzgußkammern oder Spritzgußwerkzeuge für das Spritzgießen, Kalanderwalzen oder Prägerwalzen oder Profilwerkzeuge für die Extrusion oder aber Tiefziehwerkzeuge oder Thermoformwerkzeuge für das thermische Verpressen, bzw. Backenwerkzeuge bzw. Backenformen für das thermische Blasverfahren.

Beim Spritzgießen werden die einzelnen Schichten, also die Zwischenlage, gegebenenfalls die Dekorschicht und die hitzegehärtete Schicht (die beiden letzten Schichten auch zusammen als Fertiglaminat) entweder direkt über ein Tiefziehverfahren dreidimensional vorgeformt und anschließend in einem Spritzgußwerkzeug mit dem thermoplastischen Polymeren, welches den Träger bildet, hinterspritzt, oder aber direkt erst im Spritzgußwerkzeug miteinander dreidimensional verformt und mit dem thermoplastischen Polymeren hinterspritzt. Dies kann sowohl einseitig als auch beidseitig geschehen, wobei im letzteren Fall die Zwischenlage und die hitzegehärtete Schicht sowie gegebenenfalls die Dekorschicht auf bei-5 den Seiten des Trägers angeordnet sind. Das thermoplastische Polymere des Trägers wird zunächst auf eine Temperatur von wenigstens 150°C, insbesondere von wenigstens 180°C erhitzt und dann unter einem Druck von wenigstens 20 N/cm², vorzugsweise von wenigstens 30 N/cm² in das Spritzgußwerkzeug eingebracht. Der Spritzgußvorgang erfolgt üblicherweise bei Temperaturen von 150 bis 300°C, insbesondere von 180 bis 280°C und Drücken von 20 bis 200 N/cm², insbesondere von 50 bis 100 N/cm². Durch die im Spritzgußwerkzeug auftretenden Temperaturen und Drücke erreicht man nicht nur eine sehr gute Verbindung der Zwischenlage sowie gegebenenfalls der Dekorschicht mit dem thermoplastischen Träger, sondern auch eine weitere Aushärtung des Schichtverbundmaterials, welches dann als dreidimensionales Formteil vorliegt. Unter Beibehaltung eines Nachdrucks von wenigstens 10 N/cm, insbesondere von wenigstens 50 N/cm² wird dann das Werkzeug innerhalb von 0,1 bis 5 Minuten, insbesondere innerhalb von 0,3 bis 1,2 Minuten auf eine Temperatur von bis zu 20°C, insbesondere von bis zu 30°C abgekühlt und das erhaltene dreidimensionale Formteil anschließend aus dem Spritzgußwerkzeug nach dem Zuschnitt entnommen.

Zur dreidimensionalen Vorformung der einzelnen Schichten können übliche thermische Verformungsverfahren der Kunststofftechnik Verwendung finden, beispielsweise das Thermoformen oder aber das Tiefziehverfahren. Beim Tiefziehverfahren werden die dreidimensional zu verformenden Schichten über ein Tiefziehwerkzeug gezogen, welches das gewünschte dreidimensionale Profil aufweist und dabei mittels einer geeigneten Wärmequelle, beispielsweise eines Flächenwärmers auf eine Temperatur von 150 bis 250°C, insbesondere auf eine Temperatur von 160 bis 200°C erwärmt wird. Nach einer Anwärmdauer von etwa 0,1 bis 2 Minuten, insbesondere von 0,4 bis 1,5 Minuten wird die Wärmequelle entfernt und die einzelnen Schichten werden dann über das von unten unter Vakuum hochkommende Tiefziehwerkzeug gezogen. Auf diese Weise erhält man dreidimensional verformte Schichten.

Beim Extrusionsverfahren ist es möglich, die Zwischenlage, die hitzegehärtete Schicht sowie gegebenenfalls die Dekorschicht entweder als einzelne Folien oder aber zusammen als Fertiglaminat zunächst über ein Tiefziehverfahren oder durch Profilextrusion dreidimensional zu verformen, danach in einem Profilwerkzeug auf eine Temperatur von wenigstens 180°C, vorzugsweise von wenigstens 200°C zu erhitzen und anschließend bei einem Druck von wenigstens 80 N/cm², vorzugsweise von wenigstens 90 N/cm² in ein Breitschlitzdüsenwerkzeug einzubringen. Weiterhin können die Zwischenlage, die hitzegehärtete Schicht sowie gegebenenfalls die Dekorschicht über temperierte Kalander- oder Prägewalzen dem thermoplastischen Kunststoff des Trägers einseitig oder beidseitig zugeführt werden (sogenanntes Kaschieren) und auf diese Weise miteinander verbunden werden. Beim erfindungsgemäßen Verfahren kann das dreidimensionale Verformen der einzelnen Schichten auch innerhalb des Werkzeuges, d.h. der Kalander- oder Prägewalzen erfolgen. Dabei werden üblicherweise Temperaturen von 100 bis 250°C, insbesondere von 150 bis 210°C und Drücke von 20 bis 200 N/cm², insbesondere von 30 bis 120 N/cm² eingestellt. Die mittleren Verweilzeiten betragen dabei 0,1 bis 10 Minuten, insbesondere 0,2 bis 5 Minuten. Auf diese Weise erreicht man eine sehr gute Haftung der einzelnen Schichten untereinander. Das erhaltene dreidimensionale Formteil weist ferner gute Oberflächeneigenschaften auf. Unter Beibehaltung eines Anpreßdrucks der Kalander- oder Prägewalzen von wenigstens 50 N/cm², insbesondere von wenigstens 70 N/cm² wird dann das Werkzeug innerhalb einer Zeit von wenigstens 0,2 Minuten, insbesondere innerhalb einer Zeit von wenigstens 2,0 Minuten auf eine Temperatur von bis zu 20°C, vorzugsweise von bis zu 30°C abgekühlt und das so erhaltene dreidimensionale Formteil nach dem Zuschnitt entnommen.

Eine Variante des Extrusionsverfahren ist das sogenannte Profilextrusionsverfahren, bei dem die einzelnen Schichten des Schichtverbundmaterials, insbesondere die Zwischenlage über eine Kalibrierung dreidimensional so verformt werden, daß diese anschließend dem eigentlichen Profil, d.h. dem Träger aus thermoplastischem Kunststoff, direkt zugeführt werden kann.

Weiterhin ist es möglich, das erfindungsgemäße Verfahren zur Herstellung eines dreidimensionalen Schichtverbundmaterials in der Weise durchzuführen, daß die einzelnen Schichten thermisch verpreßt werden, wobei die dreidimensionale Verformung entweder vorab über ein vorgeschaltetes Tiefziehverfahren oder aber direkt in der Presse erfolgen kann. Dabei gibt man ein thermoplastisches Kunststoffgranulat direkt auf einen Laminatverbund aus der Zwischenlage, gegebenenfalls der Dekorschicht und der hitzegehärteten Schicht und verpreßt dieses miteinander bei Temperaturen von 150 bis 300°C, insbesondere von 160 bis 250°C und besonders bevorzugt von 180 bis 240°C, Drücken von 20 bis 200 N/cm², insbesondere von 40 bis 120 N/cm² und besonders bevorzugt von 50 bis 100 N/cm² sowie Preßzeiten von 0,1 bis 10 Minuten, insbesondere von 0,2 bis 5 Minuten und besonders bevorzugt von 0,5 bis 2,5 Minuten.

Darüber hinaus ist es möglich, das Verbinden der Zwischenlage, gegebenenfalls der Dekorschicht und der hitzegehärteten Schicht mit dem Träger sowie das dreidimensionale Verformen des dabei entstehenden Schichtverbundmaterials durch ein thermisches Blasverfahren durchzuführen. Dabei wird zunächst das thermoplastische Polymer des Trägers über einen Extruder und eine Ringdüse zu einem Schlauch geformt, danach zwischen eine Backenform eingebracht, in die zuvor die Zwischenlage, gegebenenfalls die Dekorschicht und die hitzegehärtete Schicht eingelegt wurden und die bei Temperaturen von 50 bis 100°C, insbesondere von 60 bis 90°C geschlossen wird. Nach Schließen der Backenform wird bei Temperaturen von 150 bis 300°C, bevorzugt von 150 bis 250°C und insbesondere von 160 bis 200°C, Drücken von 20 bis 100 N/cm², insbesondere von 50 bis 80 N/cm² und Blaszeiten von 0,2 bis 5 Minuten, insbesondere von 0,2 bis 2,0 Minuten und besonders bevorzugt von 0,3 bis 1,2 Minuten der thermoplastische Schlauch mit den eingelegten Schichten verbunden und zugleich dreidimensional verformt. Auch bei diesem Verfahren kann die dreidimensionale Verformung sowohl vor als auch während der thermischen Behandlung im Werkzeug erfolgen.

Die auf diese Weise erhaltenen dreidimensionalen Formteile können auch an ihrer Oberfläche eingefärbt sein.

Mit Hilfe des erfindungsgemäßen Verfahrens ist es u.a. möglich, ein dreidimensionales Formteil herzustellen, das eine hervorragende Haftung der einzelnen Bestandteile miteinander, also der Zwischenlage, der hitzegehärteten Schicht, gegebenenfalls der Dekorschicht und des Trägers, aufweist. Das erfindungsgemäße Verfahren ist technisch wenig aufwendig, liefert beliebig dreidimensional ausstaltbare Formteile und kann ohne großen Aufwand in üblichen Werkzeugen durchgeführt werden. Die dabei erhaltenen dreidimensionalen Formteile sind gegen chemische, mechanische und thermische Beschädigungen, wie sie beispielsweise durch Feuchtigkeit, Chemikalien oder Zigarettenglut entstehen können, resistent.

Das erfindungsgemäße Verfahren eignet sich insbesondere bei der Herstellung solcher dreidimensionaler Formteile, bei denen eine dekorative Oberfläche mit besonderer Stabilität gegen chemische, mechanische und thermische Belastungen kombiniert werden soll.

Das erfindungsgemäße Verfahren ist insbesondere zur Herstellung solcher dreidimensionaler Formteile einsetzbar, die in Möbeln, Fußbodenbelägen, Wandpaneelen, Haushaltsgeräten oder in der Elektro-, Bau- oder der Automobilindustrie Verwendung finden.

In den nachfolgenden Beispielen soll die Erfindung noch näher erläutert werden. Im Rahmen der Ausführungsbeispiele wurden folgende Meßmethoden angewandt:
- Das Verhalten gegenüber Wasserdampf wurde nach EN 438-2.24 bestimmt;
- die Abriebfestigkeit wurde nach EN 438-2.6 bei 6000 bis 10 000 U/min bestimmt;
- die Druckfestigkeit wurde durch Kugelfalltest nach EN 438 bei einer 8 mm Trägerplatte, Abdruckgröße: 5,5 mm, bestimmt;
- die Resistenz gegen Zigarettenglut wurde nach EN 438-2.18 bestimmt;
- die Chemikalienbeständigkeit wurde nach DIN 51958 bestimmt;
- die Kratzfestigkeit wurde nach ISO 1518 bestimmt;
- die Haftfestigkeit wurde bestimmt, indem mit einem Rasiermesser kreuzförmig parallele Schnitte (Gitterschnitte) in die Oberfläche eines Formteils eingebracht wurden. Dann wurde ein Klebeband auf die mit den Schnitten versehende Oberfläche aufgepreßt und danach wurde das Klebeband im rechten Winkel kräftig von der Oberfläche abgezogen. Wenn mit dem Klebeband praktisch keine Segmente von der Oberfläche entfernt werden konnten, wurde die Haftfestigkeit mit "+" bezeichnet, wenn sich einzelne Segmente in einer Menge von bis zu 10 % der Gesamtbelegung abziehen ließen, wurde das Ergebnis mit "±" bezeichnet, und wenn mehr als 10 % der gesamten Oberfläche abgezogen werden konnte wurde das Ergebnis mit "-" bezeichnet. Besonders gute Haftfestigkeiten wurden mit "++" bewertet.

### Beispiel 1

Ein mit 40 Gew.-% Talkum verstärktes Propylenhomopolymer mit einer Schmelzflußrate (MFR), nach ISO 1133, von 15 g/10 min., bei 230°C und 2,16 kg, wurde auf eine Temperatur von 280°C erhitzt und unter einem Spritzdruck von 100 N/cm² in eine flache Spritzgußkammer eingespritzt, in die vorher ein dreidimensional vorgeformtes Fertiglaminat auswerferseitig eingelegt war. Die dreidimensionale Vorformung erfolgte durch Tiefziehen in einem Tellerwerkzeug bei Temperaturen von 180°C, Drücken von 80 N/cm² und mittleren Verweilzeiten von 0,5 Minuten. Das Fertiglaminat bestand aus einer Zwischenlage aus bedrucktem Papier und einer hitzegehärteten Schicht (Overlay) aus einem mit Melaminharz gehärtetem Polypropylenvlies mit einem Gewicht von ca. 30 g pro m². Unter Aufrechterhaltung eines Nachdrucks von 50 N/cm² wurde das Werkzeug innerhalb einer Zeitdauer von 1 Minute auf eine Temperatur von 30°C abgekühlt, dann wurde die Spritzgußkammer geöffnet und das entstandene dreidimensionale Schichtverbundmaterial entnommen. Die Ergebisse der Messungen an dem Schichtverbundmaterial sind in der nachfolgenden Tabelle angegeben.

### Beispiel 2

Das gleiche wie im Beispiel 1 verwendete, mit Talkum verstärkte Propylenhomopolymer wurde in einem Extruder auf eine Temperatur von 280°C erhitzt und anschließend bei einem Druck von 100 N/cm² in eine Breitschlitzdüse gebracht, in die vorher über Profilwalzen ein dreidimensional vorgeformtes Fertiglaminat zugeführt wurde.

Dabei wurde das gleiche Fertiglaminat eingesetzt, wie im Beispiel 1 beschrieben. Die dreidimensionale Vorformung erfolgte hierbei durch Profilextrusion in einem Profilwerkzeug bei Temperaturen von 180°C, Drücken von 100 N/cm² und mittleren Verweilzeiten von 0,2 Minuten.

Von der Breitschlitzdüse aus wurde das Propylenhomopolymer zusammen mit dem dreidimensional verformten Fertiglaminat über Kalandrierwalzen geführt, wo die Verbindung der einzelnen Schichten erfolgte. Unter Aufrechterhaltung eines Anpreßdruckes der Kalandrierwalzen (Werkzeug) von 50 N/cm² wurde diese innerhalb von 1 Minute auf eine Temperatur von 30°C abgekühlt, danach wurde das erhaltene dreidimensionale Schichtverbundmaterial nach dem Zuschnitt entnommen. Die Ergebnisse der Messungen des erhaltenen Schichtverbundmaterials sind in der nachfolgenden Tabelle angegeben.

### Beispiel 3

Das gleiche wie im Beispiel 1 verwendete, mit Talkum verstärkte Propylenhomopolymer wurde als Granulat in ein thermisches Werkzeug eingeführt, welches aus zwei beheizten Werkzeughälften bestand, die jeweils ein spezielles dreidimensionales Profil aufwiesen und mit Hilfe geeigneter Druckvorrichtungen miteinander verpreßt wurden. Das Granulat des Propylenhomopolymers wurde dabei auf das gleiche dreidimensional verformte Fertiglaminat aufgebracht, das bereits im Beispiel 1 verwendet wurde. Das thermische Verpressen erfolgte bei einer Temperatur von 190°C, einem Druck von 50 N/cm² und einer Preßzeit von 0,5 Minuten. Dabei wurde das Granulat des Propylenhomopolymers thermisch mit dem Fertiglaminat zu einem dreidimensionalen Schichtverbundmaterial verpreßt.

Nach dem Abkühlen des Preßwerkzeuges erhielt man ein dreidimensionales Schichtverbundmaterial, welches die in der nachfolgenden Tabelle aufgeführten Meßergebnisse aufwies.

### Beispiel 4

Das Beispiel 1 wurde unter den gleichen Bedingungen, mit dem gleichen Fertiglaminat und in der gleichen Spritzgußkammer wiederholt, wobei aber anstelle des mit Talkum verstärkten Propylenhomopolymers jetzt ein unverstärktes Propylenhomopolymer mit einer Schmelzflußrate (MFR), nach ISO 1133, von 15 g/10 min., bei 230°C und 2,16 kg verwendet wurde.

Das dabei erhaltene dreidimensionale Schichtverbundmaterial wies Eigenschaften auf, die in der nachfolgenden Tabelle wiedergegeben sind.

### Beispiel 5

Das Beispiel 2 wurde unter den gleichen Bedingungen, mit dem gleichen Fertiglaminat und mit den gleichen Kalandrierwalzen wiederholt, wobei aber anstelle des mit Talkum verstärktem Propylenhomopolymer jetzt ein unverstärktes Propylenhomopolymer mit einer Schmelzflußrate (MFR), nach ISO 1133, von 15 g/10 min., bei 230°C und 2,16 kg verwendet wurde.

Das dabei erhaltene dreidimensionale Schichtverbundmaterial wies Eigenschaften auf, die in der nachfolgenden Tabelle wiedergegeben sind.

### Beispiel 6

Das Beispiel 3 wurde unter den gleichen Bedingungen, mit dem gleichen Fertiglaminat und mit dem gleichen thermischen Preßwerkzeug wiederholt, wobei aber anstelle des mit Talkum verstärkten Propylenhomopolymers jetzt ein unverstärktes Propylenhomopolymer mit einem Schmelzflußindex (MFR), nach ISO 1133, von 15 g/10 min., bei 230°C und 2,16 kg verwendet wurde.

Das dabei erhaltene dreidimensionale Schichtverbundmaterial wies Eigenschaften auf, die in der nachfolgenden Tabelle wiedergegeben sind.

### Beispiel 7

Das Beispiel 1 wurde unter den gleichen Bedingungen, mit dem gleichen Fertiglaminat und in der gleichen Spritzgußkammer wiederholt, wobei aber jetzt ein recycliertes Propylenhomopolymer verwendet wurde, das mit 30 Gew.-% Talkum verstärkt war und eine Schmelzflußrate (MFR), nach ISO 1133, von 15 g/10 min., bei 230°C und 2,16 kg, aufwies.

Das dabei erhaltene dreidimensionale Schichtverbundmaterial wies Eigenschaften auf, die in der nachfolgenden Tabelle wiedergegeben sind.

### Beispiel 8

Das Beispiel 1 wurde mit dem gleichen, mit Talkum verstärkten Propylenhomopolymer, dem gleichen Fertiglaminat und in der gleichen Spritzgußkammer wiederholt, wobei aber die dreidimensionale Verformung nicht vor, sondern während der thermischen Behandlung in der Spritzgußkammer erfolgte. Dies geschah bei Temperaturen von 190°C, Drücken von 80 N/cm² und mittleren Verweilzeiten von 0,2 Minuten durch Direktverformung.

Das dabei erhaltene dreidimensionale Schichtverbundmaterial wies Eigenschaften auf, die in der nachfolgenden Tabelle wiedergegeben sind.

### Vergleichsbeispiel A

Das Beispiel 1 wurde mit dem gleichen, mit Talkum verstärkten Propylenhomopolymer, dem gleichen Fertiglaminat und in der gleichen Spritzgußkammer wiederholt, wobei aber das Fertiglaminat weder vor, noch während der thermischen Behandlung in der Spritzgußkammer dreidimensional verformt wurde.

Das dabei erhaltene Schichtverbundmaterial konnte nicht als Formteil ausgestaltet werden, da es dreidimensional nicht verformbar war.

### Vergleichsbeispiel B

Eine handelsübliche Arbeitsplatte bestehend aus einem Träger in Form einer Holzplatte und einem darauf aufgebrachten Fertiglaminat wurde analog wie das Beispiel 1 vermessen. Die Ergebnisse dieser Messungen sind in der nachfolgenden Tabelle aufgeführt.

### Beispiel 9

Ein unverstärktes Propylenhomopolymer mit einer Schmelzflußrate (MFR), nach ISO 1133 von 3,0 g/10 min., bei 230°C und 2,16 kg, wurde auf eine Temperatur von 260°C erhitzt und über einen Blasdorn in ein offenes Backenwerkzeug als Schlauch gedrückt. Nach diesem Vorgang schloß sich das Backenwerkzeug, in das vorher ein Fertiglaminat eingelegt wurde. Das Werkzeug hatte dabei eine Temperatur von 60°C. Nach Schließen des Backenwerkzeugs wurde bei einer Temperatur von 175°C, Drücken von 70 N/cm² und Blaszeiten von 0,3 Minuten der thermoplastische Schlauch mit dem Fertiglaminat verbunden. Das Fertiglaminat bestand aus einer Zwischenlage aus Polypropylen und einer hitzegehärteten Schicht (Overlay) aus einem Polypropylenvlies mit darauf aufgebrachtem Melaminharz mit einem Gewicht von 40 g pro m² und einem Beharzungsgrad von 150 %. Das nach der Öffnung des Backenwerkzeuges entnommene dreidimensionale Schichtverbundmaterial wies Eigenschaften auf, die in der nachfolgenden Tabelle wiedergegeben sind.

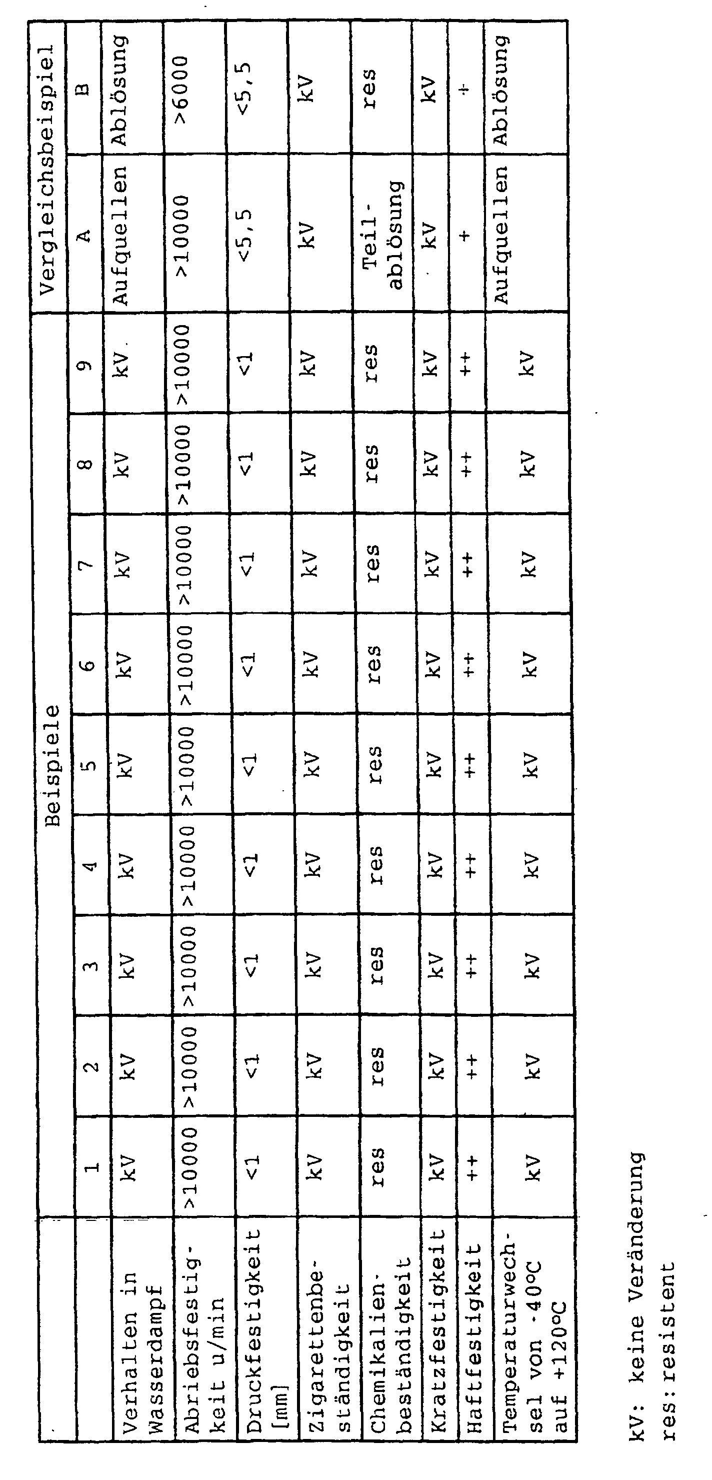

Aus der Tabelle ergibt sich, daß das erfindungsgemäße Verfahren zu dreidimensionalen Schichtverbundmaterialien führt, die sich u.a. durch eine hohe Beständigkeit gegenüber mechanischen, chemischen und thermischen Belastungen auszeichnen. Darüber hinaus sind sie aufgrund ihrer dreidimensionalen Struktur vielseitig einsetzbar, u.a. als Formteile im Automobilbereich, in der Elektroindustrie sowie in der Möbelbranche.

## Patentansprüche

1. Verfahren zur Herstellung eines dreidimensionalen Formteils aus einem Schichtverbundmaterial enthaltend einen Träger aus einem thermoplastischen, Polypropylen eine darauf angeordnete Zwischenlage aus einem Vlies aus thermoplastischem Kunststoff, eine auf der Zwischenlage angeordneten Dekorschicht und eine auf der Dekorschicht aufgebrachte hitzegehärtete Schicht, bei dem die Zwischenlage, die Dekorschicht und die auf der Dekorschicht aufgebrachte hitzegehärtete Schicht in einem Werkzeug durch eine thermische Behandlung mit dem Träger verbunden werden und ferner vor oder während der thermischen Behandlung im Werkzeug noch dreidimensional verformt werden.

2. Verfahren nach Ansprüch 1, **dadurch gekennzeichnet, daß** das Verbinden der Zwischenlage, der Dekorschicht und der hitzegehärteten Schicht mit dem Träger durch Spritzgießen erfolgt.

3. Verfahren nach Anspruch 2, **dadurch gekennzeichnet, daß** das thermoplastische Polypropylen des Trägers zunächst auf eine Temperatur von wenigstens 150°C erhitzt wird und dann unter einem Druck von wenigstens 20 N/cm² in das Spritzgußwerkzeug einer Spritzgußmaschine gebracht wird, in die vorher die Folien für die Zwischenlage, die Dekorschicht und die hitzegehärtete Schicht eingelegt worden waren, anschließend bei Temperaturen von 150 bis 300°C und Drücken von 20 bis 200 N/cm² die Zwischenlage, die Dekorschicht und die hitzegehärtete Schicht durch das thermoplastische Polymer hinterspritzt werden und danach unter Beibehaltung eines Nachdrucks von wenigstens 10 N/cm² das Werkzeug innerhalb einer Zeit von 0,1 bis 5 Minuten auf eine Temperatur von bis zu 20°C abgekühlt wird.

4. Verfahren nach Ansprüch 1, **dadurch gekennzeichnet, daß** das Verbinden der Zwischenlage, der Dekorschicht und der hitzegehärteten Schicht mit dem Träger durch Extrusion erfolgt.

5. Verfahren nach Anspruch 4, **dadurch gekennzeichnet, daß** das thermoplastische Polypropylen des Trägers zunächst in einem Extruder auf eine Temperatur von wenigstens 180°C erhitzt wird und diesem dann die Zwischenlage, die Dekorschicht und die hitzegehärtete Schicht über temperierte Kalanderoder Prägewalzen zugeführt werden und auf diese Weise bei Temperaturen von 100 bis 250°C und Drücken von 20 bis 200 N/cm² miteinander verbunden werden.

6. Verfahren nach Ansprüch 1, **dadurch gekennzeichnet, daß** das Verbinden der Zwischenlage, der Dekorschicht und der hitzegehärteten Schicht mit dem Träger durch thermisches Verpressen erfolgt.

7. Verfahren nach Anspruch 6, **dadurch gekennzeichnet, daß** man das thermoplastische Polypropylen des Trägers direkt auf einen Laminatverbund aus der Zwischenlage, der Dekorschicht und der hitzegehärteten Schicht aufbringt und diese miteinander bei Temperaturen von 150 bis 300°C, Drücken von 20 bis 200 N/cm² sowie Presszeiten von 0,1 bis 10 Minuten miteinander verpreßt.

8. Verfahren nach Ansprüch 1, **dadurch gekennzeichnet, daß** das Verbinden der Zwischenlage, der Dekorschicht und der hitzegehärteten Schicht mit dem Träger durch ein thermisches Blasverfahren erfolgt.

9. Verfahren nach Anspruch 8, **dadurch gekennzeichnet, daß** man zunächst das thermoplastische Polymer des Trägers über einem Extruder und eine Ringdüse zu einem Schlauch formt, danach zwischen eine Backenform einbringt, in die zuvor die Zwischenlage, die Dekorschicht und die hitzegehärtete Schicht eingelegt wurden und nach Schließen der Bakkenform bei Temperaturen von 50 bis 100°C den plastifizierten Schlauch über einen Blasdorn aufbläst, wobei dieser auf diese Weise dann bei Temperaturen von 150 bis 300°C, Drücken von 20 bis 100 N/cm² und Blaszeiten von 0,2 bis 5 Minuten mit den eingelegten Schichten verbunden und zugleich dreidimensional verformt wird.

## Claims

1. A process for producing a three-dimensional molding made from a layered composite material comprising a thermoplastic polypropylene backing, an intermediate layer arranged thereupon made from a thermoplastic nonwoven, a decorative layer arranged upon the intermediate layer, and a heat-cured layer applied to the decorative layer, in which the intermediate layer, the decorative layer, and the heat-cured layer applied to the decorative layer are bonded to the backing by heat treatment in a molding system and these are also given a three-dimensional shape prior to or during the heat treatment in the molding system

2. A process as claimed in claim 1, wherein injection molding is used to bond the intermediate layer, the decorative layer, and the heat-cured layer to the backing.

3. A process as claimed in claim 2, wherein the thermoplastic polypropylene of the backing is first heated to at least 150°C and then introduced into the injection mold of an injection molding machine into which the films for the intermediate layer, the decorative layer, and the heat-cured layer have previously been placed at a pressure of at least 20 N/cm², followed by in-mold coating of the intermediate layer, the decorative layer, and the heat-cured layer with the thermoplastic polymer at from 150 to 300°C and at a pressure of from 20 to 200 N/cm², followed by cooling the mold within a period of from 0.1 to 5 minutes while maintaining an afterpressure of at least 10 N/cm² to a temperature which can extend to 20°C.

4. A process as claimed in claim 1, wherein extrusion is used to bond the intermediate layer, the decorative layer, and the heat-cured layer to the backing.

5. A process as claimed in claim 4, wherein the thermoplastic polypropylene of the backing is first heated in an extruder to at least 180°C and then the intermediate layer, the decorative layer, and the heat-cured layer are brought together with this by way of temperature-controlled calendering or embossing rolls and in this way are bonded to one another at from 100 to 250°C and at a pressure of from 20 to 200 N/cm2.

6. The process as claimed in claim 1, wherein hot press molding is used to bond the intermediate layer, the decorative layer, and the heat-cured layer to the backing.

7. The process as claimed in claim 6, wherein the thermoplastic polypropylene of the backing is applied directly to a laminated composite made from the intermediate layer, the decorative layer, and the heat-cured layer, and these are press-molded together at from 150 to 300°C and at a pressure of from 20 to 200 N/cm² and with a press time of from 0.1 to 10 minutes.

8. A process as claimed in claim 1, wherein a blowing process with heat is used to bond the intermediate layer, the decorative layer, and the heat-cured layer to the backing.

9. A process as claimed in claim 8, wherein the thermoplastic polymer of the backing is first molded by way of an extruder and an annular die to give a tube, and then is introduced into a split mold into which the intermediate layer, the decorative layer, and the heat-cured layer have previously been inserted, and once the split mold has been closed the plasticized tube is expanded by way of a blowing mandrel at from 50 to 100°C, and in this way is then bonded to the inserted layers and at the same time given a three-dimensional shape at from 150 to 300°C and at a pressure of from 20 to 100 N/cm², with expansion times of from 0.2 to 5 minutes.

## Revendications

1. Procédé de production d'une pièce moulée en trois dimensions à partir d'une matière stratifiée contenant un support fait d'un propylène thermoplastique, une couche intermédiaire disposée sur celui-ci faite d'un non tissé de matière thermoplastique, une couche décorative disposée sur la couche intermédiaire et une couche thermodurcie déposée sur la couche décorative, dans lequel la couche intermédiaire, la couche décorative et la couche thermodurcie déposée sur la couche décorative sont assemblées avec le support dans un outil de façonnage au moyen d'un traitement thermique et sont ensuite façonnées en trois dimensions avant ou pendant le traitement thermique dans l'outil de façonnage.

2. Procédé selon la revendication 1, **caractérisé en ce que** l'on réalise l'assemblage de la couche intermédiaire, de la couche décorative et de la couche thermodurcie avec le support au moyen d'un moulage par injection.

3. Procédé selon la revendication 2, **caractérisé en ce que** l'on chauffe d'abord le polypropylène thermoplastique du support à une température d'au moins 150°C, qu'on l'introduit ensuite sous une pression d'au moins 20 N/cm² dans l'outil de moulage par injection d'une machine de moulage par injection, dans laquelle les feuilles pour la couche intermédiaire, la couche décorative et la couche thermodurcie ont été préalablement déposées, qu'on moule par injection la couche intermédiaire, la couche décorative et la couche thermodurcie sur le polymère thermoplastique à des températures de 150°C à 300°C et sous des pressions de 20 N/cm² à 200 N/cm², que l'on refroidit ensuite l'outil à une température allant jusqu'à 20°C, en maintenant une pression d'au moins 10 N/cm², en 0,1 minute à 5 minutes.

4. Procédé selon la revendication 1, **caractérisé en ce que** l'on réalise l'assemblage avec le support de la couche intermédiaire, de la couche décorative et de la couche thermodurcie au moyen d'une extrusion.

5. Procédé selon la revendication 4, **caractérisé en ce que** l'on chauffe d'abord le polypropylène thermoplastique du support à une température d'au moins 180°C dans une extrudeuse, que l'on introduit ensuite la couche intermédiaire, la couche décorative et la couche thermodurcie à l'aide de cylindres de calandre ou de calandre à gaufrer chauffés et qu'on les assemble ainsi à des températures de 100°C à 250°C et sous des pressions de 20 N/cm² à 200 N/cm².

6. Procédé selon la revendication 1, **caractérisé en ce que** l'on réalise l'assemblage avec le support de la couche intermédiaire, de la couche décorative et de la couche thermodurcie au moyen d'une compression thermique.

7. Procédé selon la revendication 6, **caractérisé en ce que** l'on dépose le polypropylène thermoplastique du support directement sur un stratifié composé de la couche intermédiaire, de la couche décorative et de la couche thermodurcie et qu'on les comprime ensemble à des températures de 150°C à 300°C, sous des pressions de 20 N/cm² à 200 N/cm² ainsi que pendant des temps de compression de 0,1 minute à 10 minutes.

8. Procédé selon la revendication 1, **caractérisé en ce que** l'on réalise l'assemblage avec le support de la couche intermédiaire, de la couche décorative et de la couche thermodurcie au moyen d'un procédé de soufflage thermique.

9. Procédé selon la revendication 8, **caractérisé en ce que** l'on façonne d'abord le polymère thermoplastique du support en un tube à l'aide d'une extrudeuse et d'une filière annulaire, **en ce qu'**on l'introduit ensuite dans un moule à mâchoires, dans lequel la couche intermédiaire, la couche décorative et la couche thermodurcie ont été préalablement déposées, et qu'après avoir fermé le moule à mâchoires, on gonfle le tube plastifié à l'aide d'un poinçon de soufflage à des températures de 50°C à 100°C, lors de quoi il est ainsi assemblé avec les couches préalablement déposées et en même temps façonné en trois dimensions à des températures de 150°C à 300°C, sous des pressions de 20 N/cm² à 100 N/cm² et pendant des temps de soufflage de 0,2 minutes à 5 minutes.
